# EUROPEAN PATENT SPECIFICATION

(11) **EP 2 974 445 B1**
(45) Date of publication and mention of the grant of the patent: **15.11.2017**
(21) Application number: 14711425.0
(22) Date of filing: 05.03.2014
(51) Int. Cl.: H04W 36/00, H04W 36/04, H04W 84/04, H04W 36/32, H04W 36/24

(54) **METHOD AND APPARATUS FOR UE MEASUREMENT ASSISTED HANDOVER CLASSIFICATION**
VERFAHREN UND VORRICHTUNG ZUR BENUTZERGERÄTEMESSUNGSUNTERSTÜTZTEN HANDOVER-KLASSIFIZIERUNG
PROCÉDÉ ET APPAREIL POUR LA CLASSIFICATION DU TRANSFERT INTERCELLULAIRE D'UN UE ASSISTÉE PAR MESURAGE

(30) Priority: 12.03.2013 US 201313797954
(43) Date of publication of application: 20.01.2016
(73) Proprietor: Qualcomm Incorporated, San Diego, CA 92121-1714 (US)
(72) Inventor: SINGH, Damanjit, San Diego, California 92121 (US); TOKGOZ, Yeliz, San Diego, California 92121 (US); PRAKASH, Rajat, San Diego, California 92121 (US); PATEL, Chirag Sureshbhai, San Diego, California 92121 (US); YAVUZ, Mehmet, San Diego, California 92121 (US)
(74) Representative: Dunlop, Hugh Christopher
(86) International application number: PCT/US2014/020814
(87) International publication number: WO 2014/164144

(56) References cited:
- WO-A1-2013/025580
- WO-A1-2013/126811
- WO-A2-2008/114130
- ERICSSON ET AL: "Mobility State Estimation consideration", 3GPP DRAFT; R2-121416 - MOBILITY STATE ESTIMATION CONSIDERATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, 20 March 2012 (2012-03-20), XP050606309,

## Description

### BACKGROUND

The disclosed aspects relate generally to communications between and/or within devices and specifically to methods and systems for user equipment (UE) measurement assisted handover classification.

Wireless communication systems are widely deployed to provide various types of communication content such as, for example, voice, data, and so on. Typical wireless communication systems may be multiple-access systems capable of supporting communication with multiple users by sharing available system resources (*e.g.,* bandwidth, transmit power, ...). Examples of such multiple-access systems may include code division multiple access (CDMA) systems, time division multiple access (TDMA) systems, frequency division multiple access (FDMA) systems, orthogonal frequency division multiple access (OFDMA) systems, and the like. Additionally, the systems can conform to specifications such as third generation partnership project (3GPP), 3GPP long term evolution (LTE), ultra mobile broadband (UMB), evolution data optimized (EV-DO), *etc.*

Generally, wireless multiple-access communication systems may simultaneously support communication for multiple mobile devices. Each mobile device may communicate with one or more base stations *via* transmissions on forward and reverse links. The forward link (or downlink) refers to the communication link from base stations to mobile devices, and the reverse link (or uplink) refers to the communication link from mobile devices to base stations. Further, communications between mobile devices and base stations may be established *via* single-input single-output (SISO) systems, multiple-input single-output (MISO) systems, multiple-input multiple-output (MIMO) systems, and so forth. In addition, mobile devices can communicate with other mobile devices (and/or base stations with other base stations) in peer-to-peer wireless network configurations.

To supplement conventional base stations, additional low power base stations can be deployed to provide more robust wireless coverage to mobile devices. For example, low power base stations (*e.g.,* which can be commonly referred to as Home NodeBs or Home eNBs, collectively referred to as H(e)NBs, femto nodes, femtocell nodes, pico nodes, micro nodes, *etc*.) can be deployed for incremental capacity growth, richer user experience, in-building or other specific geographic coverage, and/or the like. In some configurations, such low power base stations are connected to the Internet *via* broadband connection (*e.g.,* digital subscriber line (DSL) router, cable or other modem, *etc*.), which can provide the backhaul link to the mobile operator's network. In this regard, low power base stations are often deployed in homes, offices, *etc.* without consideration of a current network environment.

As low-power base stations may provide support over a relatively small area, mobile devices may handover between low-power base stations with relative frequency. For example, a fast moving mobile device (e.g., traveling in a vehicle) may cross many small coverage areas. In another example, a stationary and/or slow moving mobile device may be present at the edge of coverage areas of multiple low-power base stations and may handover between the various low-power base stations (e.g., ping-pong handover). In such an environment, frequent handovers may result in packet losses, voice artifacts, delays, that may diminish a user experience. Further, frequent handovers may generate excessive network side signaling. Misclassification of mobile device or user equipment (UE) for handover may lead to service problems. For example, adjusting handover parameters to delay handovers for a fast moving UE may result in a call drop, while triggering handover to a macro-cell on another frequency or radio access technology for a stationary or slow-moving ping-ponging UE may result in the loss of offloading to small cells or low-power base stations, required for achieving high network capacity.

The contribution to 3GPP TSG-RAN WG2, entitled, "On UE-speed-based methods for improving the mobility performance in HetNets" " discusses the impact of user equipment (UE) speed on the handover (HO) performance in a heterogeneous network (HetNet).

Thus, improved apparatus and methods for classifying frequent handovers may be desired.

### SUMMARY

The object of the present invention is achieved through the subject-matter of the independent claims. Preferred embodiments are set out in the dependent claims. The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

In accordance with one or more aspects and corresponding disclosure thereof, various aspects are described in connection with making UE handover decisions. In one example, a node is equipped to obtain one or more UE measurement values associated with a UE, determine a mobility state of the UE based at least in part on the obtained one or more UE measurement values, and adjust one or more handover parameters based at least in part on the determined mobility state of the UE. In another example, a UE is equipped to obtain one or more UE measurements, determine a handover state of a UE based on the obtained one or more UE measurements, and perform a handover-related action based on the determined handover state of the UE.

According to a related aspect, a method for determining a handover classification for a UE is provided. The method can include obtaining one or more UE measurement values associated with a UE. Further, the method can include determining a mobility state of the UE based at least in part on the obtained one or more UE measurement values. Moreover, the method may include adjusting one or more handover parameters based at least in part on the determined mobility state of the UE.

Another aspect relates to a communications apparatus enabled to determine a handover classification for a UE. The communications apparatus can include means for obtaining one or more UE measurement values associated with a UE. Further, the communications apparatus can include means for determining a mobility state of the UE based at least in part on the obtained one or more UE measurement values. Moreover, the communications apparatus can include means for adjusting one or more handover parameters based at least in part on the determined mobility state of the UE.

Another aspect relates to a communications apparatus. The apparatus can include a processing system configured to obtain one or more UE measurement values associated with a UE. Further, the processing system may be configured to determine a mobility state of the UE based at least in part on the obtained one or more UE measurement values. Moreover, the processing system may further be configured to adjust one or more handover parameters based at least in part on the determined mobility state of the UE.

Still another aspect relates to a computer program product, which can have a computer-readable medium including code for obtaining one or more UE measurement values associated with a UE. Further, the computer-readable medium may include code for determining a mobility state of the UE based at least in part on the obtained one or more UE measurement values. Moreover, the computer-readable medium can include code for adjusting one or more handover parameters based at least in part on the determined mobility state of the UE.

According to another related aspect, a method for determining a handover classification by a UE is provided. The method can include obtaining one or more UE measurements. Further, the method can include determining a handover state of a UE based on the obtained one or more UE measurements. Moreover, the method may include performing a handover-related action based on the determined handover state of the UE.

Another aspect relates to a communications apparatus enabled to determine a handover classification by a UE. The communications apparatus can include means for obtaining one or more UE measurements. Further, the communications apparatus can include means for determining a handover state of a UE based on the obtained one or more UE measurements. Moreover, the communications apparatus can include means for performing a handover-related action based on the determined handover state of the UE.

Another aspect relates to a communications apparatus. The apparatus can include a processing system configured to obtain one or more UE measurements. Further, the processing system may be configured to determine a handover state of a UE based on the obtained one or more UE measurements. Moreover, the processing system may further be configured to perform a handover-related action based on the determined handover state of the UE.

Still another aspect relates to a computer program product, which can have a computer-readable medium including code for obtaining one or more UE measurements. Further, the computer-readable medium may include code for determining a handover state of a UE based on the obtained one or more UE measurements. Moreover, the computer-readable medium can include code for performing a handover-related action based on the determined handover state of the UE.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

The disclosed aspects will hereinafter be described in conjunction with the appended drawings, provided to illustrate and not to limit the disclosed aspects, wherein like designations denote like elements, and in which:
FIG. 1 is a block diagram of an example heterogeneous access system that provides support for multiple UEs through one or more femto nodes and one or more macro nodes.
FIG. 2 is a block diagram of an example system that facilitates handover classification for UEs that frequently handover between femto nodes.
FIG. 3 is an illustration of an example wireless network environment that can be employed in conjunction with the various systems and methods described herein.
FIG. 4 is a flow chart of a first example methodology for facilitates handover classification for UEs that frequently handover, according to an aspect.
FIG. 5 is a conceptual data flow diagram illustrating the data flow between different modules/means/components in an exemplary apparatus.
FIG. 6 is a diagram illustrating an example of a hardware implementation for an apparatus employing a processing system.
FIG. 7 is a flow chart of a second example methodology for facilitates handover classification for UEs that frequently handover, according to an aspect.
FIG. 8 is a conceptual data flow diagram illustrating the data flow between different modules/means/components in an exemplary apparatus.
FIG. 9 is a diagram illustrating an example of a hardware implementation for an apparatus employing a processing system.

### DETAILED DESCRIPTION

Various aspects are now described with reference to the drawings. In the following description, for purposes of explanation, numerous specific details are set forth in order to provide a thorough understanding of one or more aspects. It may be evident, however, that such aspect(s) may be practiced without these specific details.

As noted above, frequent handovers may result in packet losses, voice artifacts, delays, that may diminish a user experience, and frequent handovers may generate excessive network side signaling. To mitigate such frequent handovers between low-power base stations, different solutions may be adopted based on whether the mobile device is fast moving (e.g., high mobility state) or stationary or slow moving (e.g., low mobility state). For example, for a stationary and/or slow moving mobile device, handover parameters may be adjusted to delay handovers of the mobile device to at least some of the low-power base stations. In an another example, for a fast moving mobile device, a handover to macro-cell on another frequency or radio access technology may be initiated to mitigate frequent handovers. These solutions may be based on correctly classifying mobile devices as stationary or slow moving or fast moving As described further herein, low power base stations, such as femto nodes, can mitigate frequent handovers by identifying an action based on the classification of handovers (e.g., whether a UE is fast moving or ping-ponging handovers). Further, a UE may classify handovers and inform the network of a desired action and/or may perform the action itself. Based on a handover classification (e.g., fast moving UE, ping-pong UE), an appropriate action may be selected. For example, where the UE is classified as a ping-pong handover UE, handover parameters may be adjusted to delay occurrence of handover. The handover parameters may include, but are not limited to hysteresis, a Time-to-Trigger (TTT), filter coefficient, cell individual offset, measurement identity, measurement event, offset parameter for an event (e.g., *a3-Offset*)*,* frequency specific offset, etc. In another example, where the UE is classified as a fast moving UE, a handover may be initiated to a macro-node that is using a different carrier and/or radio access technology (RAT). In another aspect, where the UE is classified as a fast moving UE, handover parameters may be adjusted to reduce delay in occurrence of handovers thereby potentially avoiding call drops.

A low power base station, as referenced herein, can include a femto node, a pico node, micro node, home Node B or home evolved Node B (H(e)NB), relay, and/or other low power base stations, and can be referred to herein using one of these terms, though use of these terms is intended to generally encompass low power base stations. For example, a low power base station transmits at a relatively low power as compared to a macro base station associated with a wireless wide area network (WWAN). As such, the coverage area of the low power base station can be substantially smaller than the coverage area of a macro base station.

As used in this application, the terms "component," "module," "system" and the like are intended to include a computer-related entity, such as but not limited to hardware, firmware, a combination of hardware and software, software, or software in execution. For example, a component may be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component may be localized on one computer and/or distributed between two or more computers. In addition, these components can execute from various computer readable media having various data structures stored thereon. The components may communicate by way of local and/or remote processes such as in accordance with a signal having one or more data packets, such as data from one component interacting with another component in a local system, distributed system, and/or across a network such as the Internet with other systems by way of the signal.

Furthermore, various aspects are described herein in connection with a terminal, which can be a wired terminal or a wireless terminal. A terminal can also be called a system, device, subscriber unit, subscriber station, mobile station, mobile, mobile device, remote station, remote terminal, access terminal, user terminal, terminal, communication device, user agent, user device, or user equipment (UE). A wireless terminal or device may be a cellular telephone, a satellite phone, a cordless telephone, a Session Initiation Protocol (SIP) phone, a wireless local loop (WLL) station, a personal digital assistant (PDA), a handheld device having wireless connection capability, a tablet, a computing device, or other processing devices connected to a wireless modem. Moreover, various aspects are described herein in connection with a base station. A base station may be utilized for communicating with wireless terminal(s) and may also be referred to as an access point, a Node B, evolved Node B (eNB), home Node B (HNB) or home evolved Node B (HeNB), collectively referred to as H(e)NB, or some other terminology.

Moreover, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

The techniques described herein may be used for various wireless communication systems such as CDMA, TDMA, FDMA, OFDMA, SC-FDMA, WiFi carrier sense multiple access (CSMA), and other systems. The terms "system" and "network" are often used interchangeably. A CDMA system may implement a radio technology such as Universal Terrestrial Radio Access (UTRA), cdma2000, *etc.* UTRA includes Wideband-CDMA (W-CDMA) and other variants of CDMA. Further, cdma2000 covers IS-2000, IS-95 and IS-856 standards. A TDMA system may implement a radio technology such as Global System for Mobile Communications (GSM). An OFDMA system may implement a radio technology such as Evolved UTRA (E-UTRA), Ultra Mobile Broadband (UMB), IEEE 802.11 (Wi-Fi), IEEE 802.16 (WiMAX), IEEE 802.20, Flash-OFDM®, *etc.* UTRA and E-UTRA are part of Universal Mobile Telecommunication System (UMTS). 3GPP Long Term Evolution (LTE) is a release of UMTS that uses E-UTRA, which employs OFDMA on the downlink and SC-FDMA on the uplink. UTRA, E-UTRA, UMTS, LTE and GSM are described in documents from an organization named "3rd Generation Partnership Project" (3GPP). Additionally, cdma2000 and UMB are described in documents from an organization named "3rd Generation Partnership Project 2" (3GPP2). Further, such wireless communication systems may additionally include peer-to-peer (*e.g.*, mobile-to-mobile) *ad hoc* network systems often using unpaired unlicensed spectrums, 802.xx wireless LAN, BLUETOOTH and any other short- or long- range, wireless communication techniques.

Various aspects or features will be presented in terms of systems that may include a number of devices, components, modules, and the like. It is to be understood and appreciated that the various systems may include additional devices, components, modules, *etc.* and/or may not include all of the devices, components, modules *etc.* discussed in connection with the figures. A combination of these approaches may also be used.

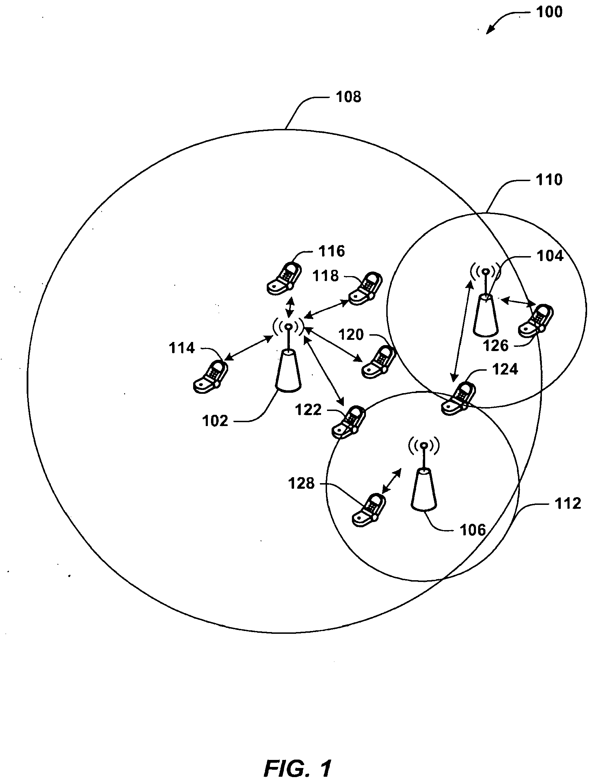

Referring to **FIG. 1****,** an example heterogeneous access system 100. System 100 comprises a macro node 102, which can be a macro base station or a femto, pico, or other low power base station node, in one example. System 100 also includes femto nodes 104 and 106, which can be substantially any type of low power base station or at least a portion thereof. The nodes 102, 104, and 106 provide respective coverage areas 108, 110, and 112. System 100 also includes a plurality of devices 114, 116, 118, 120, 122, 124, 126, and 128 that communicate with the nodes 102, 104, or 106 to receive wireless network access.

As described, the femto nodes 104 and 106 can communicate with the wireless network (not shown) over a broadband connection. In addition, femto nodes 104 and 106 can communicate with one another, and/or with macro node 102, over a backhaul connection. For example, upon initialization, one or more of the femto nodes 104 and/or 106 can also communicate with one another to form a grouping (*e.g.,* an ad-hoc network). This allows the femto nodes 104 and/or 106 to communicate to determine parameters related to serving the various devices connected thereto (*e.g.,* resource allocations, interference management, and/or the like), in one example. Moreover, femto nodes 104 and 106 may configure themselves to operate in the wireless network (*e.g.,* set transmit power, network identifiers, pilot signal resources, and/or the like based on similar information received over a backhaul connection, over-the-air, or otherwise sensed from surrounding nodes).

In an example, femto node 104 can operate in an open or hybrid access mode to offload device 124 from macro node 102, since device 124 is in range of femto node 104. In some examples, however, though device 124 may be nearer to femto node 104, femto node 104 may not be the best candidate for serving device 124. For example, macro node 102 and/or femto node 106 may have more desirable characteristics. In one example, femto node 104 may have a greater downlink and/or uplink load than macro node 102 and/or femto node 106, and thus handover to another node may result in better performance or improved experience for device 124.

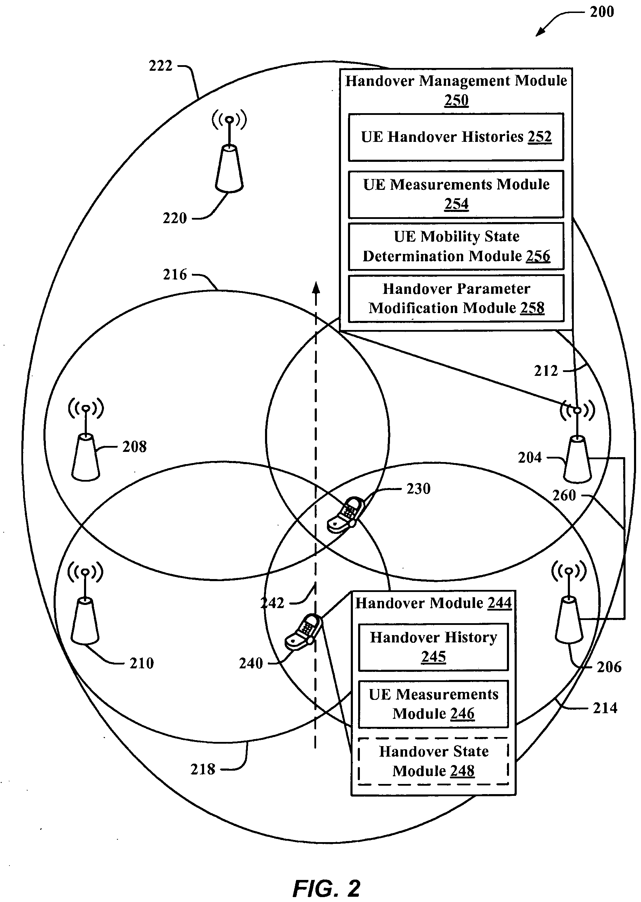

**FIG. 2** illustrates an example system 200 that facilitates handover classification for UEs that frequently handover between femto nodes. System 200 may include femto nodes 204, 206, 208, and 210 with respective coverage areas 212, 214, 216, 218. System 200 may further include one or more macro nodes 220 with a coverage area 222. In an aspect, femto nodes 204, 206, 208, and 210 and macro node 220 may be configured to use different carriers and/or different RATs. In another aspect, femto nodes 204, 206, 208, 210 may communicate with one another, and/or with macro node 220, over a backhaul connection 260. System 200 may further include one or more UEs 230, 240. In the depicted aspect, UE 230 may be a stationary UE and UE 240 may be a fast moving UE that is traveling through system 200 along path 242.

Further, each UE 230, 240 may maintain a handover history 245 which at least includes information about their recent handovers. For example, as UE 230 is located near the edge of coverage areas 212, 214, 216, 218 of femto nodes 204, 206, 208, and 210, the handover history 245 for UE 230 may have an example pattern of femto node 206, femto node 210, femto node 204, femto node 206, femto node 204, etc. In another example, as UE 240 is moving along path 242 through the coverage areas 212, 214, 216, 218 of femto nodes 204, 206, 208, and 210, the handover history 245 for UE 240 may have a substantially similar example pattern of femto node 206, femto node 210, femto node 204, femto node 206, femto node 204, etc. The handover history 245 for each UE may also be constructed by the nodes (e.g., 204, 206, etc.). For example, each node, when serving the UE, may calculate the time that a UE spends on the node. The node may then pass on time information along with the information about the node (e.g., cell identity, PLMN identity, Cell Type - macro/pico/femto/micro, etc.) to a neighboring cell, to which UE is handed over. The neighboring cell can then collect and append the similar information and pass it on to the next cell to which UE is handed over. Thus, as the UE moves from one cell to another, the UE handover history information may build up as it is passed from one cell to another. In another example, handover history 245 information may be referred to as UE history information. The handover history 245 may be provided to a node (e.g., 204, 206, etc.) to assist with classification of a UE 230, 240 for handover purposes. In such an aspect, as the UE handover histories 252 of a fast moving UE 240 or a ping-ponging UE 230 may indicate similar handover patterns, then UE handover histories 252 alone may not be sufficient to allow a femto node 204 to understand the cause of frequent handovers, and as such, alone may not be sufficient to allow the femto node 204 to classify the UE.

UE 230 and/or UE 240 may include a handover module 244 configured to assist the UE (230, 240) and/or the femto node (204, 206, 208, 210) in classifying the UE (230, 240) and adjusting handover parameters based on the UE classification. Handover module 244 may include a UE measurements module 246 configured to obtain UE measurements. In an aspect, the UE measurements may indicate radio link quality (e.g., downlink radio link quality perceived by the UE (230, 240)). For example, UE measurements may include, but are not limited to, a receive signal code power (RSCP), Reference Signal Received Power (RSRP), Received Signal Strength Indication (RSSI), path loss (PL), etc. In such an aspect, PL may be estimated from a known transmit power of a node and the received signal power at the UE. In another aspect, UE measurements module 246 may obtain values from one or more sensors associated with the UE (230, 240). For example, accelerometer values, gyroscope values, user inputted values, etc. In another aspect, UE measurements module 246 may obtain location information of the UE (230, 240). The location information may be based on Global Positioning System (GPS), observed time difference of arrival (OTDOA), etc. In an optional aspect, handover module 244 may include handover state module 248 that may be configured to classify the UE (230, 240) based at least in part on values from UE measurements module 246. For example, handover state module 248 may classify a mobility state (e.g., fast moving, slowing moving, etc.) of the UE 240 based on various information such as, but not limited to, PL, RSCP, other UE measurements, handover history 245, etc. In an aspect, handover state module 248 may generate a message to prompt a node to modify one or more handover parameters associated with the UE 240 and/or handover the UE 240 to another frequency/radio technology. In another aspect, handover state module 248 may modify its own handover parameters. In such an aspect, the UE 240 may notify a node 204 the actions/modification taken by the UE 240. For example, UE 240 may modify parameters to result in a larger TTT and/or hysteresis where the handover state module 248 classifies the UE 240 as a low mobility state (e.g., ping-pong handovers), smaller TTT and/or hysteresis where the handover state module 248 classifies the UE 240 as a high mobility state (e.g., fast moving handovers). In another aspect, handover state module 248 may indicate that one or more parameters may be applied to a subset of nodes (e.g., only ping-ponging cells). In still another aspect, handover state module 248 may prompt the UE 240 to perform forward handover to a macro node 220. In such an aspect, the macro node 220 may support communications on a different frequency and/or different RAT.

Femto node (e.g., 204, 206, 208, 210) may include handover management module 250 to assist in UE classification for handover configuration. In an aspect, handover management module 250 may include UE measurement module 254 that is configured to obtain UE measurements. Some aspects and examples of UE measurements have already been indicated above. In an aspect, UE measurement module 254 may obtain the UE measurements from UEs (e.g., 230, 240) reporting UE measurements in system 200. In an aspect, the UEs (e.g., 230, 240) may report the measurements at the time of handover, periodically, etc. In another aspect, UE measurement module 254 may obtain the UE measurements from one or more other femto nodes (e.g., 206, 208, 210) via a backhaul (e.g., X2) connection 260. In such an aspect, the UE measurements may be included (e.g., as an UE history information element) with the UE handover history 252 for a UE. In such an aspect, a source node (e.g., 306) may pass UE measurements (optionally with a UE handover history 252) to the target node (e.g., 204). Handover management module 250 may further include UE mobility state determination module 256 that may be configured to determine a mobility state of a UE based at least in part on the UE measurement values, and handover parameter modification module 258 that may be configured to adjust handover parameter(s) based at least in part on the mobility state determined by of the UE mobility state determination module 256. In an aspect, the target node (e.g., 204) may analyze the UE measurements (and optionally UE handover history 252) to classify a UE mobility state and take an appropriate action. In another aspect, another network entity (e.g., RNC, MME, gateway, management server, etc.) may perform the mobility state determination and provide it to the appropriate information to one or more femto nodes (e.g., 204, 206, 208, 210).

In an operational aspect, UE mobility state determination module 256 and/or handover state module 248 may analyze at least the UE measurements to determine a UE mobility state. In an aspect, where UE measurements fluctuate over a time duration without a substantially consistent slope (e.g., no consistent change over the time duration), then UE mobility state determination module 256 and/or handover state module 248 may classify the UE as being in a low mobility state. In an example, the UE measurements do not indicate consistent change in position. In another aspect, where UE measurements indicate that at least of the cells radio link quality is substantially consistently changing over a time duration, then UE mobility state determination module 256 and/or handover state module 248 may classify the UE as being in a high mobility state. In other words, the UE measurements indicate consistent change in position (e.g., not oscillations). Based on the determined mobility state of the, handover parameter modification module 258 and/or handover state module 248 may adjust handover parameters. For example, handover parameter modification module 258 and/or handover state module 248 may modify parameters to result in a larger TTT and/or hysteresis and/or offset when the UE is classified as a low mobility state (e.g., ping-pong handovers), smaller TTT and/or hysteresis and/or offset when the UE is classified as a high mobility state (e.g., fast moving handovers), prompting handover to a macro node 222, when the UE is classified as a high mobility state (e.g., fast moving handovers). In another aspect, handover parameter modification module 258 and/or handover state module 248 may indicate that one or more parameters may be applied to a subset of nodes (e.g., only ping-ponging cells).

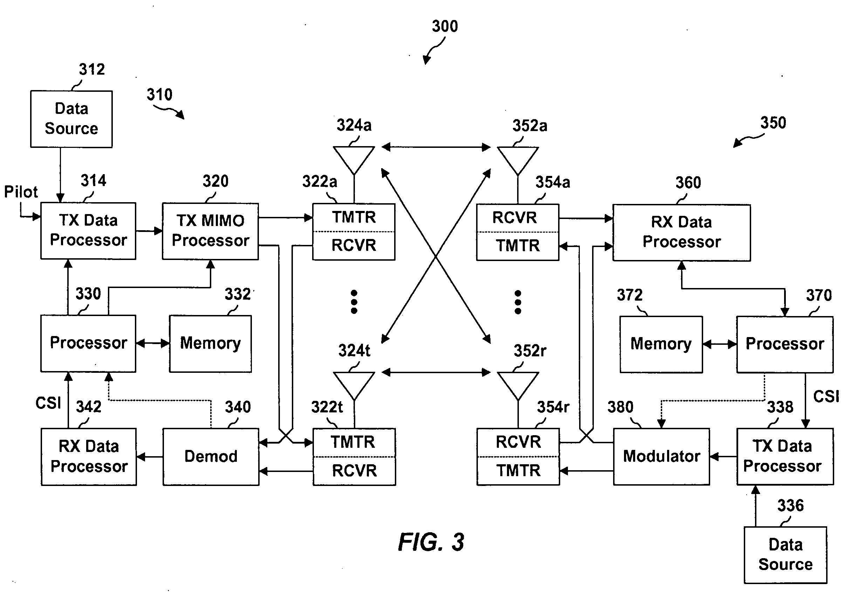

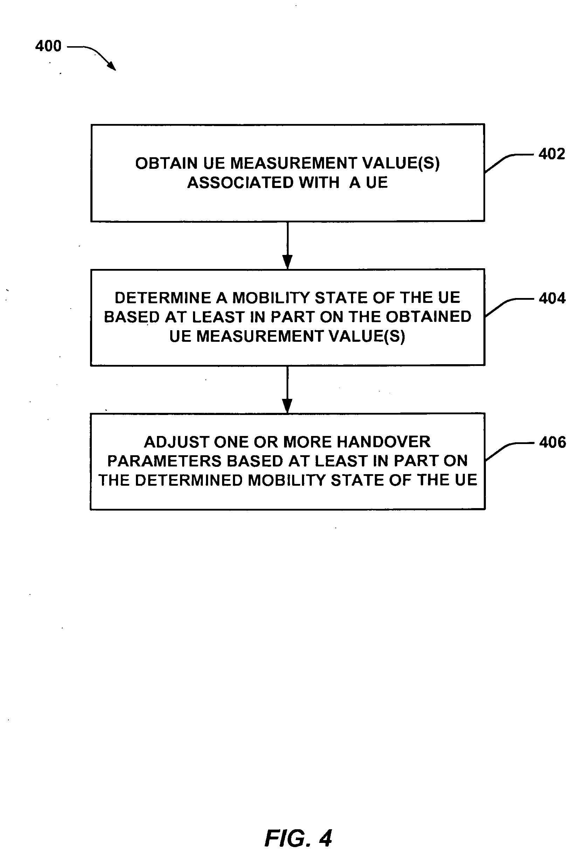

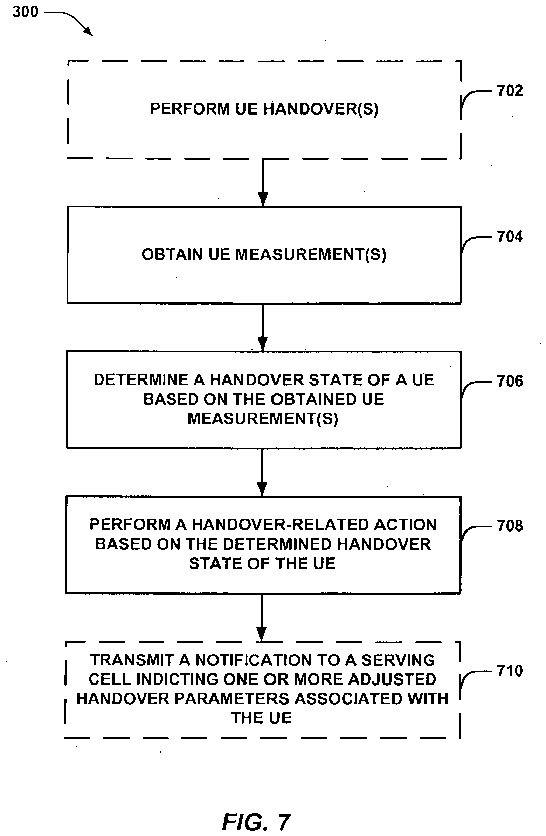

**FIG. 3** shows an example wireless communication system 300. The wireless communication system 300 depicts one base station 310, which can include a femto node, and one mobile device 350 for sake of brevity. However, it is to be appreciated that system 300 can include more than one base station and/or more than one mobile device, wherein additional base stations and/or mobile devices can be substantially similar or different from example base station 310 and mobile device 350 described below. In addition, it is to be appreciated that base station 310 and/or mobile device 350 can employ the systems (**FIGs. 1****,** **2****,** **5****,** **6****,** **8****, and** **9****)** and/or methods (**FIGs. 4** **and** **7****)** described herein to facilitate wireless communication there between. For example, components or functions of the systems and/or methods described herein can be part of a memory 332 and/or 372 or processors 330 and/or 370 described below, and/or can be executed by processors 330 and/or 370 to perform the disclosed functions.

At base station 310, traffic data for a number of data streams is provided from a data source 312 to a transmit (TX) data processor 314. According to an example, each data stream can be transmitted over a respective antenna. TX data processor 314 formats, codes, and interleaves the traffic data stream based on a particular coding scheme selected for that data stream to provide coded data.

The coded data for each data stream can be multiplexed with pilot data using orthogonal frequency division multiplexing (OFDM) techniques. Additionally or alternatively, the pilot symbols can be frequency division multiplexed (FDM), time division multiplexed (TDM), or code division multiplexed (CDM). The pilot data is typically a known data pattern that is processed in a known manner and can be used at mobile device 350 to estimate channel response. The multiplexed pilot and coded data for each data stream can be modulated (*e.g.,* symbol mapped) based on a particular modulation scheme (*e.g.,* binary phase-shift keying (BPSK), quadrature phase-shift keying (QPSK), M-phase-shift keying (M-PSK), M-quadrature amplitude modulation (M-QAM), *etc*.) selected for that data stream to provide modulation symbols. The data rate, coding, and modulation for each data stream can be determined by instructions performed or provided by processor 330.

The modulation symbols for the data streams can be provided to a TX MIMO processor 320, which can further process the modulation symbols (*e.g.*, for OFDM). TX MIMO processor 320 then provides *N_{T}* modulation symbol streams to *N_{T}* transmitters (TMTR) 322a through 322t. In various embodiments, TX MIMO processor 320 applies beamforming weights to the symbols of the data streams and to the antenna from which the symbol is being transmitted.

Each transmitter 322 receives and processes a respective symbol stream to provide one or more analog signals, and further conditions (*e.g.,* amplifies, filters, and upconverts) the analog signals to provide a modulated signal suitable for transmission over the MIMO channel. Further, *N_{T}* modulated signals from transmitters 322a through 322t are transmitted from *N_{T}* antennas 324a through 324t, respectively.

At mobile device 350, the transmitted modulated signals are received by *N_{R}* antennas 352a through 352r and the received signal from each antenna 352 is provided to a respective receiver (RCVR) 354a through 354r. Each receiver 354 conditions (*e.g.,* filters, amplifies, and downconverts) a respective signal, digitizes the conditioned signal to provide samples, and further processes the samples to provide a corresponding "received" symbol stream.

An RX data processor 360 can receive and process the *N_{R}* received symbol streams from *N_{R}* receivers 354 based on a particular receiver processing technique to provide *N_{T}* "detected" symbol streams. RX data processor 360 can demodulate, deinterleave, and decode each detected symbol stream to recover the traffic data for the data stream. The processing by RX data processor 360 is complementary to that performed by TX MIMO processor 320 and TX data processor 314 at base station 310.

The reverse link message can comprise various types of information regarding the communication link and/or the received data stream. The reverse link message can be processed by a TX data processor 338, which also receives traffic data for a number of data streams from a data source 336, modulated by a modulator 380, conditioned by transmitters 354a through 354r, and transmitted back to base station 310.

At base station 310, the modulated signals from mobile device 350 are received by antennas 324, conditioned by receivers 322, demodulated by a demodulator 340, and processed by a RX data processor 342 to extract the reverse link message transmitted by mobile device 350. Further, processor 330 can process the extracted message to determine which precoding matrix to use for determining the beamforming weights.

Processors 330 and 370 can direct (*e.g.,* control, coordinate, manage, *etc*.) operation at base station 310 and mobile device 350, respectively. Respective processors 330 and 370 can be associated with memory 332 and 372 that store program codes and data. Processors 330 and 370 can also perform functionalities described herein to support offloading devices from a femto node.

Referring to FIGs. 4 and 7, example methodologies relating to UE classification for handover is illustrated. While, for purposes of simplicity of explanation, methodologies are shown and described as a series of acts, it is to be understood and appreciated that the methodologies are not limited by the order of acts, as some acts may, in accordance with one or more embodiments, occur in different orders and/or concurrently with other acts from that shown and described herein. For example, it is to be appreciated that a methodology could alternatively be represented as a series of interrelated states or events, such as in a state diagram. Moreover, not all illustrated acts may be required to implement a methodology in accordance with one or more embodiments.

Turning to **FIG. 4****,** an example method 400 is displayed that facilitates UE classification for handovers. In an aspect, the method 400 may be performed by a serving femto node, a target femto node, a home nodeB gateway, a management server, or a home eNodeB gateway, etc. In the interests of brevity and clarity the method will be described with reference to a femto node.

At 402, a femto node may obtain UE measurement values associated with a UE. In an aspect, reception module 504 of the femto node 502 may receive the UE measurements 520 from a UE (230, 240) (e.g., in a measurement report). In another aspect, reception module 504 may receive UE measurements 522 from another node (e.g., 206, 208, 210). In such an aspect, the UE measurements 522 may be included in UE history information message. In an aspect, the other node (e.g., 206, 208, 210) may be associated with a neighbor cell. In an aspect, the UE measurements may indicate radio link quality (e.g., downlink radio link quality perceived by the UE). For example, the UE measurements may include, but are not limited to, RSCP, RSRP, RSSI, PS, etc. In another aspect, the UE measurements may include location information of the UE obtained at least in part from GPS, sensor measurements, etc. In another aspect, reception module 504 may receive a message from the UE (230, 240) indicating its mobility state based on analysis performed by the UE (230, 240).

At 404, the femto node may determine a mobility state of the UE based at least in part on the UE measurement values. In an aspect, mobility state determination module 506 may process UE measurements (520, 522) to determine a UE mobility state 524. In an aspect, the UE mobility state 524 may be determined to be a high mobility state or a low mobility state. In another aspect, mobility state determination module 506 may determine the UE mobility state 524 by analyzing the UE measurements (520, 522) over a time duration. In such an aspect, mobility state determination module 506 may determine whether the one or more UE measurement values exhibit a gradient characteristic over the time duration. In an aspect, mobility state determination module 506 may determine that the UE is in a high mobility state 524 when the one or more UE measurement values exhibit the gradient characteristic over the time duration. In an aspect, mobility state determination module 506 may determine that the UE is in a low mobility state 524 none of UE measurement values exhibit a gradient characteristic over the time duration.

At 406, the femto node may adjust one or more handover parameters based at least in part on the determined mobility state of the UE. In an aspect, handover parameter modification module 508 may receive the UE mobility state 524 and may adjust one or more parameters 526 based at least in part of the UE mobility state 524. In an aspect, handover parameter modification module 508 may hand over the UE (e.g., 240) to a cell (e.g., 222) on another frequency or another radio access technology. In an aspect, handover parameter modification module 508 may adjust the parameters 526 to reduce a delay in an occurrence of handover of the UE (e.g., 240). In an aspect, handover parameter modification module 508 may adjust the parameters 526 delay an occurrence of handover of the UE (e.g., 230). In an aspect, the parameters may include, but are not limited to hysteresis, a Time-to-Trigger (TTT), filter coefficient, cell individual offset, measurement identity, measurement event, offset parameter for an event (e.g., *a3-Offset*)*,* frequency specific offset, etc.

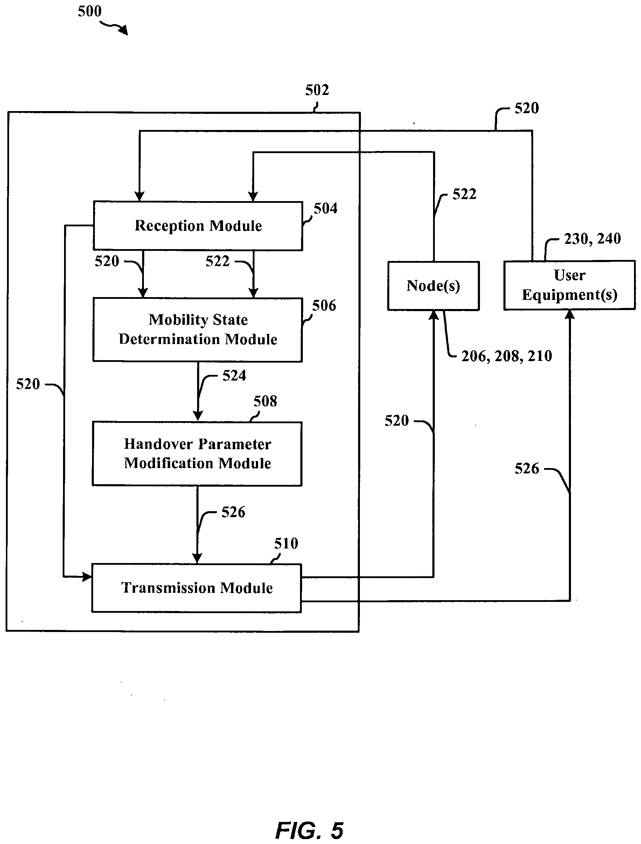

**FIG. 5** is a conceptual data flow diagram 500 illustrating the data flow between different modules/means/components in an example apparatus 502. The apparatus may be a serving node. As noted above with reference to the flow chart describe in FIG. 4, the apparatus includes reception module 504, mobility state determination module 506, handover parameter modification module 508, and transmission module 510.

The apparatus may include additional modules that perform each of the steps of the algorithm in the aforementioned flow chart of FIG. 4. As such, each block in the aforementioned flow chart of FIG. 4 may be performed by a module and the apparatus may include one or more of those modules. The modules may be one or more hardware components specifically configured to carry out the stated processes/algorithm, implemented by a processor configured to perform the stated processes/algorithm, stored within a computer-readable medium for implementation by a processor, or some combination thereof.

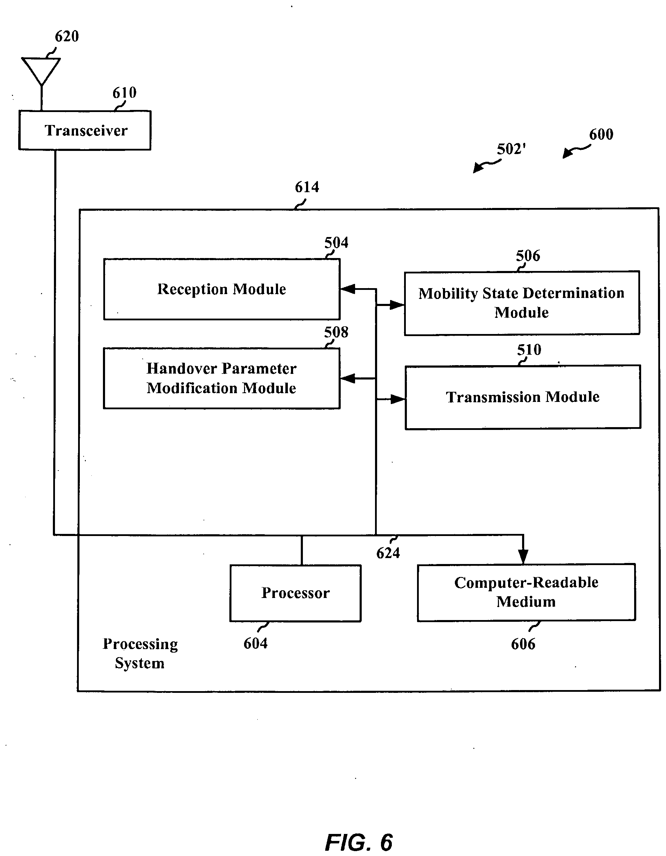

**FIG. 6** is a diagram 600 illustrating an example of a hardware implementation for an apparatus 502' employing a processing system 614. The processing system 614 may be implemented with a bus architecture, represented generally by the bus 624. The bus 624 may include any number of interconnecting buses and bridges depending on the specific application of the processing system 614 and the overall design constraints. The bus 624 links together various circuits including one or more processors and/or hardware modules, represented by the processor 604, the modules 504, 506, 508, 510, and the computer-readable medium 606. The bus 624 may also link various other circuits such as timing sources, peripherals, voltage regulators, and power management circuits, which are well known in the art, and therefore, will not be described any further.

The processing system 614 may be coupled to a transceiver 610. The transceiver 610 is coupled to one or more antennas 620. The transceiver 610 provides a means for communicating with various other apparatus over a transmission medium. The processing system 614 includes a processor 604 coupled to a computer-readable medium 606. The processor 604 is responsible for general processing, including the execution of software stored on the computer-readable medium 606. The software, when executed by the processor 604, causes the processing system 614 to perform the various functions described *supra* for any particular apparatus. The computer-readable medium 606 may also be used for storing data that is manipulated by the processor 604 when executing software. The processing system further includes at least one of the modules 504, 506, 508, and 510. The modules may be software modules running in the processor 604, resident/stored in the computer-readable medium 606, one or more hardware modules coupled to the processor 604, or some combination thereof. The processing system 614 may be a component of the node 310 and may include the memory 332 and/or at least one of the TX data processor 314, the RX data processor 342, and the controller/processor 330.

In one configuration, the apparatus 502/502' for wireless communication includes means for obtaining one or more UE measurement values associated with a UE, means for determining a mobility state of the UE based at least in part on the obtained one or more UE measurement values, and means for adjusting one or more handover parameters based at least in part on the determined mobility state of the UE. In an aspect, the apparatus 502/502' means for adjusting may be further configured to hand over the UE to a cell on another frequency or another radio access technology. In an aspect, the apparatus 502/502' means for adjusting may be further configured to modify the one or more handover parameters to reduce a delay in an occurrence of handover of the UE. In an aspect, the apparatus 502/502' means for adjusting may be further configured to modify the one or more handover parameters to delay an occurrence of handover of the UE. In another aspect, the apparatus 502/502' means for determining may be further configured to determine whether the one or more UE measurement values exhibit a gradient characteristic over the time duration. In another aspect, the apparatus 502/502' means for obtaining may be further configured to receive a message from the UE indicating its mobility state. In such an aspect, the apparatus 502/502' means for determining may be configured to determine the mobility state based on the received message.

The aforementioned means may be one or more of the aforementioned modules of the apparatus 502 and/or the processing system 614 of the apparatus 502' configured to perform the functions recited by the aforementioned means. As described *supra,* the processing system 614 may include the TX data Processor 314, the RX data Processor 342, and the controller/processor 330. As such, in one configuration, the aforementioned means may be the TX data Processor 314, the RX data Processor 342, and the controller/processor 330 configured to perform the functions recited by the aforementioned means.

Turning to **FIG. 7****,** an example method 700 is displayed that facilitates UE classification for handovers. In an aspect, the method 700 may be performed by a UE.

In an optional aspect, at 702, the UE may perform handovers. In an aspect, performance of more than a threshold number of handovers within a time duration may identify the UE 702 as a frequent handover UE.

At 704, a UE may obtain UE measurement values associated with a UE. In an aspect, reception module 804 of the UE 802 may receive the UE measurements 820 (e.g., based on system conditions and communications from various nodes (e.g., 204, 206, 208, 210). In another aspect, the UE measurements 820 may be included in a UE history information message. In an aspect, the UE measurements may indicate radio link quality (e.g., downlink radio link quality perceived by the UE 802). For example, the UE measurements may include, but are not limited to, RSCP, RSRP, RSSI, PS, etc. In another aspect, the UE measurements may include location information of the UE obtained at least in part from GPS, sensor measurements, etc.

At 706, the UE may determine a handover state of the UE based at least in part on the UE measurement values. As used herein, a handover state may refer to an operational state in which the UE has determined whether a handover would improve UE service quality and/or assist in improving overall network efficiency. In an aspect, handover state determination module 806 may process UE measurements 820 to determine a UE mobility state 822. In an aspect, the UE mobility state 822 may be determined to be a high mobility state or a low mobility state. In another aspect, handover state determination module 806 may determine the UE mobility state 822 by analyzing the UE measurements 820 over a time duration. In such an aspect, handover state determination module 806 may determine whether the one or more UE measurement values exhibit a gradient characteristic over the time duration. In an aspect, handover state determination module 806 may determine that the UE 802 is in a high mobility state 822 when the one or more UE measurement values exhibit the gradient characteristic over the time duration. In an aspect, handover state determination module 806 may determine that the UE 802 is in a low mobility state 822 none of UE measurement values exhibit a gradient characteristic over the time duration.

At 708, the UE may perform a handover-related action based on the determined mobility state of the UE 802. In an aspect, handover-related action management module 808 may receive the determined UE mobility state 822 and adjust handover parameters 824 associated with handover parameter module 810. In an aspect, handover-related action management module 808 adjust one or more parameters 824 based at least in part of the UE mobility state 822. In an aspect, handover-related action management module 808 may hand over the UE to a cell (e.g., 222) on another frequency or another radio access technology. In an aspect, handover-related action management module 808 may adjust the parameters 824 to reduce a delay in an occurrence of handover of the UE. In an aspect, handover-related action management module 808 may adjust the parameters 824 delay an occurrence of handover of the UE. In an aspect, the parameters may include, but are not limited to hysteresis, a Time-to-Trigger (TTT), filter coefficient, cell individual offset, measurement identity, measurement event, offset parameter for an event (e.g., *a3-Offset*)*,* frequency specific offset, etc.

In an optional aspect, at 710, the UE may transmit information associated with hand-over classification to the node (e.g., 204, 206, 208, 210). In an aspect, transmission module 812 may transmit a notification 826 to a serving cell indicting the adjusted one or more handover parameters 824 associated with the UE 802. In another aspect, transmission module 812 may transmit a message 826 to a serving cell to request adjustment of one or more handover parameters.

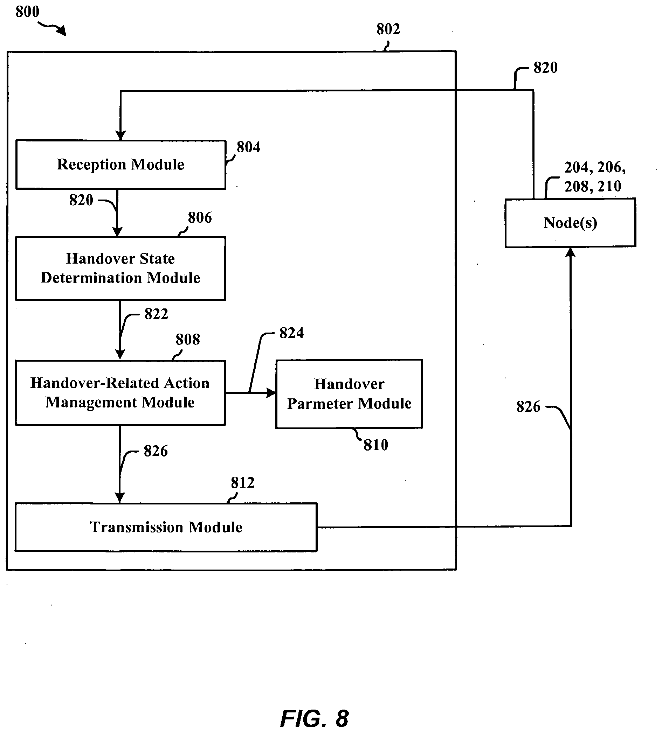

**FIG. 8** is a conceptual data flow diagram 800 illustrating the data flow between different modules/means/components in an example apparatus 802. The apparatus may be a UE. As noted above with reference to the flow chart describe in FIG. 7, the apparatus 802 includes reception module 804, handover state determination module 806, handover parameter modification module 808, handover parameter module 810, and transmission module 812.

The apparatus may include additional modules that perform each of the steps of the algorithm in the aforementioned flow chart of FIG. 7. As such, each block in the aforementioned flow chart of FIG. 7 may be performed by a module and the apparatus may include one or more of those modules. The modules may be one or more hardware components specifically configured to carry out the stated processes/algorithm, implemented by a processor configured to perform the stated processes/algorithm, stored within a computer-readable medium for implementation by a processor, or some combination thereof.

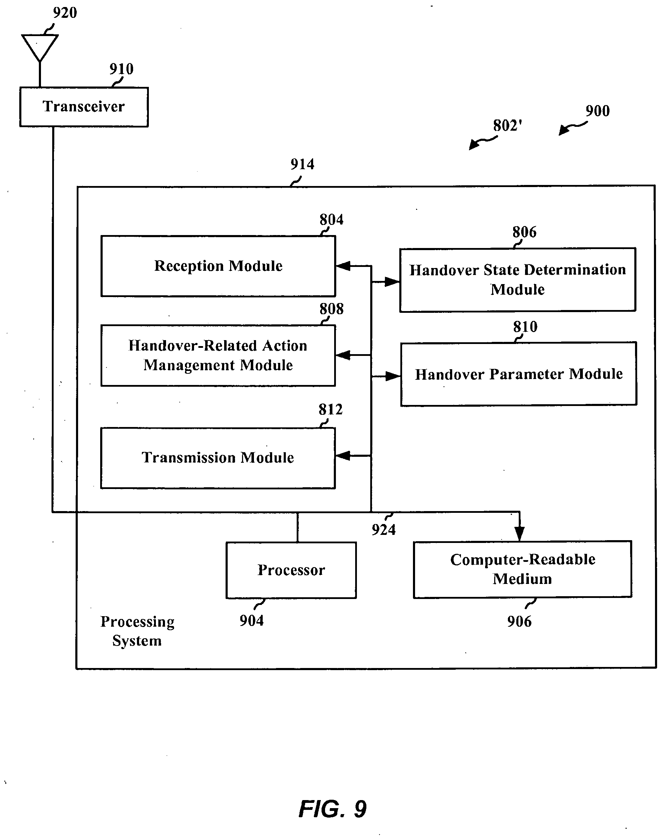

**FIG. 9** is a diagram 900 illustrating an example of a hardware implementation for an apparatus 802' employing a processing system 914. The processing system 914 may be implemented with a bus architecture, represented generally by the bus 924. The bus 924 may include any number of interconnecting buses and bridges depending on the specific application of the processing system 914 and the overall design constraints. The bus 924 links together various circuits including one or more processors and/or hardware modules, represented by the processor 904, the modules 804, 806, 808, 810, 812 and the computer-readable medium 906. The bus 924 may also link various other circuits such as timing sources, peripherals, voltage regulators, and power management circuits, which are well known in the art, and therefore, will not be described any further.

The processing system 914 may be coupled to a transceiver 910. The transceiver 910 is coupled to one or more antennas 920. The transceiver 910 provides a means for communicating with various other apparatus over a transmission medium. The processing system 914 includes a processor 904 coupled to a computer-readable medium 906. The processor 904 is responsible for general processing, including the execution of software stored on the computer-readable medium 906. The software, when executed by the processor 904, causes the processing system 914 to perform the various functions described *supra* for any particular apparatus. The computer-readable medium 906 may also be used for storing data that is manipulated by the processor 904 when executing software. The processing system further includes at least one of the modules 804, 806, 808, 810, and 812. The modules may be software modules running in the processor 904, resident/stored in the computer-readable medium 906, one or more hardware modules coupled to the processor 904, or some combination thereof. The processing system 914 may be a component of the UE 350 and may include the memory 372 and/or at least one of the TX data Processor 338, the RX data Processor 360, and the controller/processor 370.

In one configuration, the apparatus 802/802' for wireless communication includes means for obtaining one or more UE measurements, means for determining a handover state of a UE based on the obtained one or more UE measurements, and means for performing a handover-related action based on the determined handover state of the UE. In an aspect, the apparatus 802/802' may further include means for performing one or more UE handovers. In an aspect, the apparatus 802/802' means for performing may be further configured to adjust one or more handover parameters associated with the UE. In such an aspect, the apparatus 802/802' may further include means for transmitting a notification to a serving cell indicting the adjusted one or more handover parameters associated with the UE. In another aspect, the apparatus 802/802' means for transmitting may be further configured to transmit a message to a serving cell to request adjustment of one or more handover parameters. In another aspect, the apparatus 802/802' means for determining may be further configured to determine whether the one or more UE measurement values exhibit a gradient characteristic over the time duration.

The aforementioned means may be one or more of the aforementioned modules of the apparatus 802 and/or the processing system 914 of the apparatus 802' configured to perform the functions recited by the aforementioned means. As described *supra,* the processing system 914 may include the TX data Processor 338, the RX data Processor 360, and the controller/processor 370. As such, in one configuration, the aforementioned means may be the TX data Processor 338, the RX data Processor 360, and the controller/processor 370 configured to perform the functions recited by the aforementioned means.

In some aspects, a restricted femto node (which can also be referred to as a Closed Subscriber Group H(e)NB) is one that provides service to a restricted provisioned set of access terminals. This set can be temporarily or permanently extended as necessary. In some aspects, a Closed Subscriber Group (CSG) can be defined as the set of access nodes (*e.g.,* femto nodes) that share a common access control list of access terminals. A channel on which all femto nodes (or all restricted femto nodes) in a region operate can be referred to as a femto channel.

Various relationships can thus exist between a given femto node and a given access terminal. For example, from the perspective of an access terminal, an open femto node can refer to a femto node with no restricted association. A restricted femto node can refer to a femto node that is restricted in some manner (*e.g.,* restricted for association and/or registration). A home femto node can refer to a femto node on which the access terminal is authorized to access and operate on. A guest femto node can refer to a femto node on which an access terminal is temporarily authorized to access or operate on. An alien femto node can refer to a femto node on which the access terminal is not authorized to access or operate on, except for perhaps emergency situations (*e.g.,* 911 calls).

From a restricted femto node perspective, a home access terminal can refer to an access terminal that authorized to access the restricted femto node. A guest access terminal can refer to an access terminal with temporary access to the restricted femto node. An alien access terminal can refer to an access terminal that does not have permission to access the restricted femto node, except for perhaps emergency situations, for example, 911 calls (*e.g.,* an access terminal that does not have the credentials or permission to register with the restricted femto node).

For convenience, the disclosure herein describes various functionality in the context of a femto node. It should be appreciated, however, that a pico node can provide the same or similar functionality as a femto node, but for a larger coverage area. For example, a pico node can be restricted, a home pico node can be defined for a given access terminal, and so on.

A wireless multiple-access communication system can simultaneously support communication for multiple wireless access terminals. As mentioned above, each terminal can communicate with one or more base stations *via* transmissions on the forward and reverse links. The forward link (or downlink) refers to the communication link from the base stations to the terminals, and the reverse link (or uplink) refers to the communication link from the terminals to the base stations. This communication link can be established *via* a single-in-single-out system, a MIMO system, or some other type of system.

The various illustrative logics, logical blocks, modules, components, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, *e.g.,* a combination of a DSP and a microprocessor, a plurality of microprocessors, one or more microprocessors in conjunction with a DSP core, or any other such configuration. Additionally, at least one processor may comprise one or more modules operable to perform one or more of the steps and/or actions described above. An exemplary storage medium may be coupled to the processor, such that the processor can read information from, and write information to, the storage medium. In the alternative, the storage medium may be integral to the processor. Further, in some aspects, the processor and the storage medium may reside in an ASIC. Additionally, the ASIC may reside in a user terminal. In the alternative, the processor and the storage medium may reside as discrete components in a user terminal.

In one or more aspects, the functions, methods, or algorithms described may be implemented in hardware, software, firmware, or any combination thereof. If implemented in software, the functions may be stored or transmitted as one or more instructions or code on a computer-readable medium, which may be incorporated into a computer program product. Computer-readable media includes both computer storage media and communication media including any medium that facilitates transfer of a computer program from one place to another. A storage medium may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, substantially any connection may be termed a computer-readable medium. For example, if software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs usually reproduce data optically with lasers. Combinations of the above should also be included within the scope of computer-readable media.

While the foregoing disclosure discusses illustrative aspects and/or embodiments, it should be noted that various changes and modifications could be made herein without departing from the scope of the described aspects and/or embodiments as defined by the appended claims. Furthermore, although elements of the described aspects and/or embodiments may be described or claimed in the singular, the plural is contemplated unless limitation to the singular is explicitly stated. Additionally, all or a portion of any aspect and/or embodiment may be utilized with all or a portion of any other aspect and/or embodiment, unless stated otherwise.

## Claims

1. A method, performed by a network node, for making handover decisions, for a user equipment, UE, from a low-power base station, comprising:
obtaining (402) UE measurement values associated with a UE wherein the UE measurement values indicate radio link quality;
**characterized by**:
determining (404) a mobility state of the UE based at least in part on a time duration associated with the obtained UE measurement values, wherein the determining further comprises determining whether the UE measurement values exhibit a gradient characteristic over the time duration and wherein the mobility state comprises either a high mobility state or a low mobility state; and
adjusting (406) one or more handover parameters based at least in part on the determined mobility state of the UE, wherein adjusting the one or more handover parameters comprises modifying the one or more handover parameters to reduce a delay in an occurrence of handover of the UE when the UE is classified as being in the high mobility state and modifying the one or more handover parameters to delay the occurrence of handover of the UE when the UE is classified as being in a low-mobility state.

2. The method of claim 1, wherein the one or more UE measurement values are obtained from the UE.

3. The method of claim 2, wherein the one or more UE measurement values are received in a measurement report message.

4. The method of claim 1, wherein the one or more UE measurement values are obtained from one or more neighboring cells.

5. The method of claim 1, wherein the adjusting further comprises handing over the UE to a cell on another frequency or another radio access technology.

6. The method of claim 1, wherein the one or more handover parameters comprise at least one of: a hysteresis value, a time-to-trigger, TTT, value, a filter coefficient, a cell individual offset value, a measurement identity value, a measurement event value, an offset parameter for an event, or a frequency specific offset value.

7. The method of claim 1, wherein the radio link quality is a downlink radio link quality perceived by the UE.

8. The method of claim 1, wherein the radio link quality is indicated by at least one of:
a receive signal code power, RSCP, value;
a Reference Signal Received Power, RSRP, value;
a Received Signal Strength Indication, RSSI, value; or
a path loss, PL, value.

9. The method of claim 1, wherein the one or more UE measurement values are included in UE history information message from one or more nodes.

10. The method of claim 1, wherein the UE is determined to be in the high mobility state when at least one of the one or more UE measurement values exhibit the gradient characteristic over the time duration and the UE is determined to be in the low mobility state when the one or more UE measurement values do not exhibit the gradient characteristic over the time duration.

11. The method of claim 1, wherein the obtaining further comprises receiving a message from the UE indicating its mobility state, and wherein the determination is based on the received message.

12. The method of claim 1, wherein the determination is performed by at least one of: a serving femto node, a target femto node, a home nodeB gateway, a management server, or a home eNodeB gateway.

13. A computer program product for determining whether to handover a user equipment, UE, from a low-power base station according to any one of claims 1 to 12.

14. A network node configured to make handover decisions for a user equipment, UE, from a low-power base station, comprising:
means for obtaining (504) UE measurement values associated with a UE wherein the UE measurement values include an indication of radio link quality;
**characterized by**:
means for determining (506) a mobility state of the UE based at least in part on a time duration associated with the obtained UE measurement values, wherein the means for determining further comprises determining whether the UE measurement values exhibit a consistent change over the time duration and wherein the mobility state comprises either a high mobility state or a low mobility state; and
means for adjusting (508) one or more handover parameters based at least in part on the determined mobility state of the UE, wherein means for adjusting the one or more handover parameters comprises modifying the one or more handover parameters to reduce a delay in an occurrence of handover of the UE when the UE is classified as being in the high mobility state and modifying the one or more handover parameters to delay the occurrence of handover of the UE when the UE is classified as being in a low-mobility state.

## Patentansprüche

1. Verfahren, das durch einen Netzwerkknoten ausgeführt wird, um Handover- bzw. Übergabeentscheidungen für ein Teilnehmerendgerät bzw. UE (UE = User Equipment) von einer Niedrigleistungsbasisstation zu treffen, das Folgendes aufweist:
Erhalten (402) von UE-Messwerten, die mit einem UE assoziiert sind, wobei die UE-Messwerte eine Funkverbindungsqualität anzeigen;
**gekennzeichnet durch**:
Bestimmen (404) eines Mobilitätszustands des Teilnehmerendgeräts bzw. UE (UE = User Equipment) zumindest teilweise basierend auf einer Zeitdauer, die mit den erhaltenen UE-Messwerten assoziiert ist, wobei die Bestimmung ferner das Bestimmen aufweist, ob der UE-Messwert eine Gradientencharakteristik über die Zeitdauer hinweg aufweist und wobei der Mobilitätszustand entweder einen hohen Mobilitätszustand oder einen niedrigen Mobilitätszustand aufweist; und
Anpassen (406) von einem oder mehreren Handover- bzw. Übergabeparametern, zumindest teilweise basierend auf dem bestimmten Mobilitätszustand des UE, wobei das Anpassen von einem oder mehreren Übergabeparametern das Modifizieren des einen oder der mehreren Übergabeparameter aufweist, um eine Verzögerung beim Auftreten der Übergabe des UE zu verringern, wenn das UE als in dem hohen Mobilitätszustand befindlich klassifiziert wird, und Modifizieren des einen oder der mehreren Übergabeparameter, um das Auftreten der Übergabe des UE zu verzögern, wenn das UE als in einem niedrigen Mobilitätszustand befindlich klassifiziert wird.

2. Verfahren gemäß Anspruch 1, wobei der eine oder die mehreren UE-Messwerte von dem UE erhalten werden.

3. Verfahren gemäß Anspruch 2, wobei der eine oder die mehreren UE-Messwerte in einer Messberichtnachricht empfangen werden.

4. Verfahren gemäß Anspruch 1, wobei der eine oder die mehreren UE-Messwerte von dem einen oder den mehrere Nachbarzellen erhalten werden.

5. Verfahren gemäß Anspruch 1, wobei das Anpassen ferner das Übergeben des Teilnehmerendgeräts bzw. UE an eine Zelle auf einer anderen Frequenz oder einer anderen Funkzugangstechnologie aufweist.

6. Verfahren gemäß Anspruch 1, wobei der eine oder die mehreren Übergabeparameter zumindest einen der folgenden aufweisen: einen Hysteresewert, einen Zeit-bis-Auslösungs- bzw. TTT-Wert (TTT = Time-to-Trigger), einen Filterkoeffizienten, einen individuellen Zellversatzwert, einen Messidentitätswert, einen Messereigniswert, einen Versatz- bzw. Offsetparameter für ein Ereignis oder einen frequenzspezifischen Versatz- bzw. Offsetwert.

7. Verfahren gemäß Anspruch 1, wobei die Funkverbindungsqualität eine Downlink-Funkverbindungsqualität ist, die durch das UE erkannt wird.

8. Verfahren gemäß Anspruch 1, wobei die Funkverbindungsqualität durch zumindest einen der folgenden angezeigt wird:
einen Empfangssignalcodeleistungs- bzw. RSCP-Wert (RSCP = Receive Signal Code Power);
einen Referenzsignalempfangsleistungs- bzw. RSRP-Wert (RSRP = Reference Signal Received Power);
einen Empfangssignalstärkeanzeige- bzw. RSSI-Wert (RSSI = Received Signal Strength Indication); oder
einen Pfadverlust- bzw. PL-Wert (PL = Path Loss).

9. Verfahren gemäß Anspruch 1, wobei der eine oder die mehreren UE-Messwerte in der UE-Verlaufsinformationsnachricht von einem oder mehreren Knoten enthalten sind.

10. Verfahren gemäß Anspruch 1, wobei das UE als in dem hohen Mobilitätszustand befindlich bestimmt wird, wenn zumindest einer der einen oder mehreren UE-Messwerte die Gradientencharakteristik über die Zeitdauer hinweg aufweist und bestimmt wird, dass sich das UE in dem niedrigen Mobilitätszustand befindet, wenn der eine oder die mehreren UE-Messwerte keine Gradientencharakteristik über die Zeitdauer hinweg aufweist.

11. Verfahren gemäß Anspruch 1, wobei das Erhalten ferner das Empfangen einer Nachricht von dem UE aufweist, die seinen Mobilitätszustand anzeigt, und wobei die Bestimmung auf der empfangenen Nachricht basiert.

12. Verfahren gemäß Anspruch 1, wobei die Bestimmung durch zumindest einen der Folgenden ausgeführt wird: einen bedienenden Femto-Knoten, einen Ziel-Femto-Knoten, einen Home-NodeB-Gateway, einen Verwaltungsserver oder einen Home-eNodeB-Gateway.

13. Computerprogrammprodukt zur Bestimmung, ob ein Teilnehmerendgerät bzw. UE von einer Niedrigleistungsbasisstation gemäß einem der Ansprüche 1 bis 12 übergeben werden soll.

14. Netzwerkknoten, der konfiguriert ist, um Handover- bzw. Übergabeentscheidungen für ein Teilnehmerendgerät bzw. UE von einer Niedrigleistungsbasisstation vorzunehmen, der Folgendes aufweist:
Mittel zum Erhalten (504) von UE-Messwerten, die mit einem UE assoziiert sind, wobei die UE-Messwerte eine Anzeige der Funkverbindungsqualität aufweisen, **gekennzeichnet durch**:
Mittel zum Bestimmen (506) eines Mobilitätszustands des UE, zumindest teilweise basierend auf einer Zeitdauer, die mit den erhaltenen UE-Messwerten assoziiert ist, wobei das Mittel zum Bestimmen ferner das Bestimmen aufweist, ob die UE-Messwerte eine beständige Änderung über die Zeitdauer hinweg aufweisen und wobei der Mobilitätszustand entweder einen hohen Mobilitätszustand oder einen niedrigen Mobilitätszustand aufweist; und
Mittel zum Anpassen (508) von einem oder mehreren Handover- bzw. Übergabeparametern zumindest teilweise basierend auf dem bestimmten Mobilitätszustand des UE, wobei das Mittel zum Anpassen des einen oder der mehreren Übergabeparameter das Modifizieren des einen oder der mehreren Übergabeparameter aufweist, um eine Verzögerung beim Auftreten der Übergabe des UE zu verringern, wenn das UE als in dem hohen Mobilitätszustand befindlich klassifiziert wird, und Modifizieren des einen oder der mehreren Übergabeparameter, um das Auftreten der Übergabe des UE zu verzögern, wenn das UE als in dem niedrigen Mobilitätszustand befindlich klassifiziert wird.

## Revendications

1. Un procédé, exécuté par un noeud de réseau, destiné à une prise de décisions de transfert, pour un équipement d'utilisateur, UE, à partir d'une station de base à faible puissance, comprenant :
l'obtention (402) de valeurs de mesure d'UE associées à un UE où les valeurs de mesure d'UE indiquent une qualité de liaison radio,
**caractérisé par** :
la détermination (404) d'un état de mobilité de l'UE basé au moins en partie sur une durée associée aux valeurs de mesure d'UE obtenues, où la détermination comprend en outre la détermination si les valeurs de mesure d'UE présentent une caractéristique de gradient sur la durée et où l'état de mobilité comprend soit un état de forte mobilité ou un état de faible mobilité, et
l'ajustement (406) d'un ou de plusieurs paramètres de transfert basés au moins en partie sur l'état de mobilité déterminé de l'UE, où l'ajustement des un ou plusieurs paramètres de transfert comprend la modification des un ou plusieurs paramètres de transfert de façon à réduire un retard dans une occurrence de transfert de l'UE lorsque l'UE est classé être dans l'état de forte mobilité et la modification des un ou plusieurs paramètres de transfert de façon à retarder l'occurrence de transfert de l'UE lorsque l'UE est classé être dans un état de faible mobilité.

2. Le procédé selon la Revendication 1, où les une ou plusieurs valeurs de mesure d'UE sont obtenues à partir de l'UE.

3. Le procédé selon la Revendication 2, où les une ou plusieurs valeurs de mesure d'UE sont reçues dans un message de rapport de mesure.

4. Le procédé selon la Revendication 1, où les une ou plusieurs valeurs de mesure d'UE sont obtenues à partir d'une ou de plusieurs cellules voisines.

5. Le procédé selon la Revendication 1, où l'ajustement comprend en outre le transfert de l'UE vers une cellule sur une autre fréquence ou une autre technologie d'accès radio.

6. Le procédé selon la Revendication 1, où les un ou plusieurs paramètres de transfert comprennent au moins un élément parmi : une valeur d'hystérésis, une valeur de temps de déclenchement, TTT, un coefficient de filtre, une valeur de décalage individuel de cellule, une valeur d'identité de mesure, une valeur d'événement de mesure, un paramètre de décalage pour un événement ou une valeur de décalage spécifique à une fréquence.

7. Le procédé selon la Revendication 1, où la qualité de liaison radio est une qualité de liaison radio en liaison descendante perçue par l'UE.

8. Le procédé selon la Revendication 1, où la qualité de liaison radio est indiquée par au moins une valeur parmi :
une valeur de puissance de code de signal de réception, RSCP,
une valeur de puissance reçue de signal de référence, RSRP,
une valeur d'indication d'intensité de signal reçue, RSSI, ou
une valeur d'affaiblissement de propagation, PL.

9. Le procédé selon la Revendication 1, où les une ou plusieurs valeurs de mesure d'UE sont incluses dans un message d'informations d'historique d'UE provenant d'un ou de plusieurs noeuds.

10. Le procédé selon la Revendication 1, où l'UE est déterminée être dans l'état de forte mobilité lorsqu'au moins une des une ou plusieurs valeurs de mesure d'UE présente la caractéristique de gradient sur la durée et l'UE est déterminé être dans l'état de faible mobilité lorsque les une ou plusieurs valeurs de mesure d'UE ne présentent pas la caractéristique de gradient sur la durée.

11. Le procédé selon la Revendication 1, où l'obtention comprend en outre la réception d'un message à partir de l'UE indiquant son état de mobilité, et où la détermination est basée sur le message reçu.

12. Le procédé selon la Revendication 1, où la détermination est exécutée par au moins un élément parmi : un noeud femto de desserte, un noeud femto cible, une passerelle de noeud B domestique, un serveur de gestion ou une passerelle de noeud B évolué domestique.

13. Un produit de programme informatique destiné à la détermination s'il convient de transférer un équipement d'utilisateur, UE, à partir d'une station de base à faible puissance selon l'une quelconque des Revendications 1 à 12.

14. Un noeud de réseau configuré de façon à prendre des décisions de transfert pour un équipement d'utilisateur, UE, à partir d'une station de base à faible puissance comprenant :
un moyen d'obtention (504) de valeurs de mesure d'UE associées à un UE où les valeurs de mesure d'UE comprennent une indication de qualité de liaison radio,
**caractérisé par** :
un moyen de détermination (506) d'un état de mobilité de l'UE basé au moins en partie sur une durée associée aux valeurs de mesure d'UE obtenues, où le moyen de détermination comprend en outre la détermination si les valeurs de mesure d'UE présentent une modification homogène sur la durée et où l'état de mobilité comprend soit un état de forte mobilité ou un état de faible mobilité, et
un moyen d'ajustement (508) d'un ou de plusieurs paramètres de transfert basés au moins en partie sur l'état de mobilité déterminé de l'UE, où le moyen d'ajustement des un ou plusieurs paramètres de transfert comprend la modification des un ou plusieurs paramètres de transfert de façon à réduire un retard dans une occurrence de transfert de l'UE lorsque l'UE est classé être dans l'état de forte mobilité et la modification des un ou plusieurs paramètres de transfert de façon à retarder l'occurrence de transfert de l'UE lorsque l'UE est classé être dans un état de faible mobilité.
